# EUROPEAN PATENT APPLICATION

(11) **EP 2 846 268 A1**
(43) Date of publication of application: **11.03.2015**
(21) Application number: 12876016.2
(22) Date of filing: 25.06.2012
(51) Int. Cl.: G06F 17/30

(54) **GRAPHICAL BOOKMARK REALIZATION METHOD, DEVICE AND TERMINAL FOR EMBEDDED BROWSER**

(30) Priority: 03.05.2012 CN 201210134471
(71) Applicant: ZTE Corporation, Shenzhen, Guangdong 518057 (CN)
(72) Inventor: PAN, Lei, Shenzhen Guangdong 518057 (CN)
(74) Representative: Brevalex
(86) International application number: PCT/CN2012/077460
(87) International publication number: WO 2013/163843

(57) **Abstract**

Described is a graphical bookmark implementation method and device for an embedded browser, and a terminal. The method includes: accessing a Web site through the embedded browser; acquiring a Favicon or a site logo of the Web site; and binding the Favicon or the site logo with information of a bookmark when the Web site needs to be stored as the bookmark, and presenting the Favicon or the site logo as a graphical bookmark on a browser interface. As such, graphical bookmark information can be acquired to distinguish different sites, and the Favicon and a site logo picture are much smaller than the whole web page and very suitable for the embedded browser on a portable mobile communication terminal with a smaller screen, so that the problem that a web page thumbnail cannot be clearly seen due to the adoption of a web page thumbnail manner is avoided.

## Description

### TECHNICAL FIELD

The disclosure relates to the field of communications, and in particular to a graphical bookmark implementation method and device for an embedded browser, and a terminal.

### BACKGROUND

At present, along with the development of a wireless Internet technology, a mobile communication terminal can usually access the Web by virtue of various embedded browsers. In these embedded browser applications, a user can usually add own favourite sites into a bookmark list, entries in the bookmark list then stores the title and Uniform Resource Locator (URL) information of the sites, so that the user can access these sites directly by virtue of the bookmark list without keying the sites in the future.

But in a practical application, some sites have long names or URLs which are difficult to completely display in the embedded browser of the portable mobile communication terminal. In order to solve this problem, now there appears a graphical bookmark management manner, by which thumbnails of web pages are extracted and associated with the title and URL information of the corresponding sites to make clearer the contents in the bookmark list.

A web page thumbnail manner-based bookmark management method is relatively simple, but is only applicable to a mobile communication terminal with a larger screen. However, the vast majority of conventional portable mobile communication terminals have limited screen sizes, so that the adoption of the web page thumbnail manner-based bookmark management method always causes the problem that a user experience is lowered due to the fact that the thumbnails of the web pages cannot be clearly seen and conveniently selected by the user. Even on some mobile communication terminals with larger screens, the problem that some larger web pages cannot be clearly displayed also exists, so that a direct display effect cannot be achieved.

In addition, in a conventional bookmark management manner, all bookmarks are displayed in the same list in a concentrated way, and along with the increase of the number of the bookmarks added by the user, the problem that the lookup of the bookmarks is increasingly inconvenient tends to arise.

### SUMMARY

A purpose of the disclosure is to provide a graphical bookmark implementation method and device for an embedded browser, and a terminal, which are suitable for the embedded browser on a portable mobile terminal with a smaller screen and can avoid the problem that a web page thumbnail cannot be clearly seen due to the adoption of a web page thumbnail-based bookmark manner in the prior art.

The disclosure is implemented by adopting a technical solution as follows.

A graphical bookmark implementation method for an embedded browser is provided, which includes:
a Web site is accessed by virtue of the embedded browser;
a Favicon or a site logo of the Web site is acquired; and
the Favicon or the site logo is bound with information of a bookmark when the Web site needs to be stored as the bookmark, and the Favicon or the site logo is presented as a graphical bookmark on a browser interface of the embedded browser.

Preferably, the information of the bookmark may include title information and URL information of the Web site.

Preferably, the binding and presenting operation may include:
the URL information in the information of the bookmark is parsed, and a top level domain name of the Web site is acquired according to the URL information;
when the top level domain name has existed in a bookmark list, the Web site is grouped to a broad heading where the top level domain name belongs, in which a graphical bookmark of the top level domain name is a Favicon or a site logo which is presented in the bookmark list and corresponds to the top level domain name; and
when the top level domain name does not exist in the bookmark list, a graphical bookmark is created according to the Favicon or the site logo corresponding to the top level domain name, the created graphical bookmark is presented in the bookmark list, and the Web site is grouped to the broad heading where the top level domain name belongs.

Preferably, the method may further include: after the binding and presenting operation,
it is calculated clicking counts of all graphical bookmarks presented in the bookmark list, and graphical bookmarks with a greater number of clicks are presented at the top of the bookmark list according to a ranking of the clicking counts of the all graphical bookmarks.

Preferably, the method may further include: after the binding and presenting operation,

it is calculated clicking counts of all graphical bookmarks presented in the bookmark list, and according to a ranking of the clicking counts of the all graphical bookmarks, graphical bookmarks with a greater number of clicks are pushed to a home page of the embedded browser for display.

A graphical bookmark implementation method for an embedded browser is provided, which includes
a Web site is accessed by virtue of the embedded browser;
a self-defined Favorites Icon (Favicon) uniquely corresponding to the Web site is set by virtue of a graphical bookmark edition module; and
the self-defined Favicon is bound with information of a bookmark when the Web site needs to be stored as the bookmark, and the self-defined Favicon is presented as a graphical bookmark on a browser interface of the embedded browser.

A graphical bookmark implementation device for an embedded browser is provided, which includes an access module, an acquisition module and a processing module.

The access module is configured to access a Web site by virtue of the embedded browser.

The acquisition module is configured to acquire a Favorites Icon (Favicon) or a site logo of the Web site from the Web site which is accessed by the access module and provide the Favicon or the site logo to the processing module.

The processing module is configured to acquire the Favicon or the site logo from the acquisition module when the Web site needs to be stored as a bookmark, bind the Favicon or the site logo with information of the bookmark, and present the Favicon or the site logo as a graphical bookmark on a browser interface of the embedded browser.

Preferably, the processing module may be configured to store title information and URL information of the Web site as the information of the bookmark.

Preferably, the processing module may be configured to:
parse the URL information in the information of the bookmark when the Web site needs to be stored as the bookmark, and acquire a top level domain name of the Web site according to the URL information;
when the top level domain name has existed in a bookmark list, group the Web site to a broad heading where the top level domain name belongs, wherein a graphical bookmark of the top level domain name is a Favicon or a site logo which is presented in the bookmark list and corresponds to the top level domain name; and
when the top level domain name does not exist in the bookmark list, create a graphical bookmark according to the Favicon or the site logo corresponding to the top level domain name, present the created graphical bookmark in the bookmark list, and group the Web site to the broad heading where the top level domain name belongs.

Preferably, the processing module may be further configured to, after presenting the Favicon or the site logo as a graphical bookmark on a browser interface of the embedded browser,
calculate clicking counts of all graphical bookmarks presented in the bookmark list, and present the graphical bookmarks with a greater number of clicks at the top of the bookmark list according to a ranking of the clicking counts of the all graphical bookmarks.

Preferably, the device may further include: a graphical bookmark edition module, configured to set a self-defined Favicon uniquely corresponding to the Web site accessed by the access module and transmit the self-defined Favicon to the processing module,
the processing module is further configured to receive the self-defined Favicon transmitted by the graphical bookmark edition module, bind the self-defined Favicon with the information of the bookmark when the Web site needs to be stored as the bookmark, and present the self-defined Favicon as the graphical bookmark on the browser interface, and
the access module is further configured to provide a currently accessed Web site to the graphical bookmark edition module.

A terminal includes the abovementioned graphical bookmark implementation device for the embedded browser is provided, the device including: an access module, an acquisition module and a processing module

The access module is configured to access a Web site by virtue of the embedded browser.

The acquisition module is configured to acquire a Favorites Icon (Favicon) or a site logo of the Web site from the Web site which is accessed by the access module and provide the Favicon or the site logo to the processing module.

The processing module is configured to acquire the Favicon or the site logo from the acquisition module when the Web site needs to be stored as a bookmark, bind the Favicon or the site logo with information of the bookmark, and present the Favicon or the site logo as a graphical bookmark on a browser interface of the embedded browser.

It can be seen from the technical solutions of the disclosure that, graphical bookmark information is generated according to the acquired Favicon and a site logo picture of the Web site, and then bound with the bookmark information and used for distinguishing different sites. The Favicon and the site logo picture as a mark of the site or a web page are much smaller than the whole web page and very suitable for the embedded browser on the portable mobile communication terminal with the smaller screen, so that the problem is avoided that the web page thumbnail cannot be clearly seen due to the adoption of the web page thumbnail-based bookmark manner.

### BRIEF DESCRIPTION OF THE DRAWINGS

Fig. 1 is a flowchart of a graphical bookmark implementation method for an embedded browser according to the disclosure;
Fig. 2 is a flowchart of a graphical bookmark implementation method for an embedded browser according to an embodiment of the disclosure;
Fig. 3 is a diagram of displaying a graphical bookmark on a terminal according to an embodiment of the disclosure;
Fig. 4 is a diagram of pushing a graphical bookmark to a main interface according to an embodiment of the disclosure;
Fig. 5 is a structure diagram of a graphical bookmark implementation device for an embedded browser according to an embodiment of the disclosure; and
Fig. 6 is a structure diagram of another graphical bookmark implementation device for an embedded browser according to an embodiment of the disclosure.

The implementation of the purpose, functional features and good effects of the disclosure are further described below with reference to detail embodiments and the drawings.

### DETAILED DESCRIPTION

The technical solution of the disclosure is further described below with reference to the drawings and the specific embodiments in detail, so as to enable those skilled in the art to better understand and implement the disclosure, but the listed embodiments are not intended to limit the disclosure.

All Web sites have own marks, in which the most important marks are site logos and favorites icon (Favicons for short).

In the disclosure, when the Web site needs to be stored as a bookmark, a Favicon of a Web site is acquired as a picture bound with the bookmark by default, and if the Favicon fails to be acquired, a site logo picture is bound with the bookmark. Alternatively, if both the Favicon and the logo picture of the Web site cannot be acquired, a default picture or a self-defined picture in a system is bound with the bookmark.

In addition, the Web site usually has sub-domain names, besides a main domain name, for providing different contents. For example, Baidu has sub-domain names such as Baidu News, Baidu Knows and Baidu Post Bar. There are tens of thousands of sites on the Web, but the number of bookmarks which can be stored by a conventional embedded browser is limited, so that a requirement of a user on the addition of more bookmarks cannot be met. In the disclosure, these sub-domain names adopt the same Favicon with a main site (top level domain name), and when being stored, bookmarks are classified according to the top level domain name. That is, the bookmarks associated with the main domain names and the sub-domain names which belong to the same top level domain name are grouped into the same class.

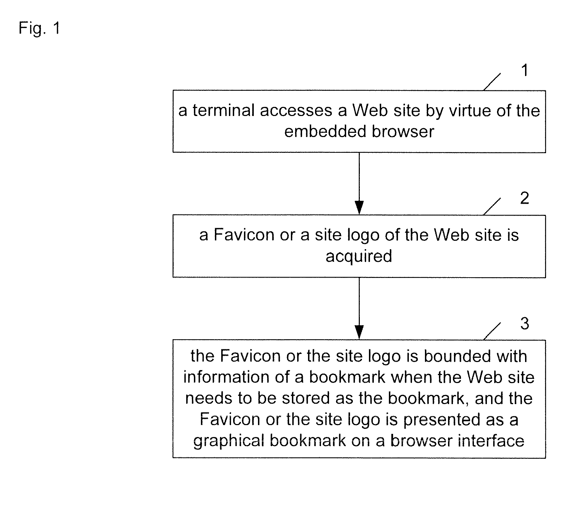

According to an embodiment of the disclosure, a graphical bookmark implementation method for an embedded browser as shown in Fig. 1 includes the following steps.

S1: a terminal accesses a Web site by virtue of the embedded browser;

S2: a Favicon or a site logo of the Web site is acquired; and

S3: the Favicon or the site logo is bound with bookmark information before a bookmark is stored, and the Favicon or the site logo is displayed as a graphical bookmark on a browser interface, in which the bookmark information includes title information and URL information of the site.

Preferably, S3 may include the following steps.

S31: the URL information in the bookmark information is parsed, and a top level domain name of the Web site is acquired.

S32: when the top level domain name has existed in a bookmark list, the Web site is grouped to a broad heading where the top level domain name belongs.

A graphical bookmark of the top level domain name is a Favicon or a site logo which is displayed in the bookmark list and corresponds to the top level domain name.

S33: when the top level domain name does not exist in the bookmark list, the graphical bookmark is created according to the Favicon or the site logo corresponding to the top level domain name, the graphical bookmark is stored in the bookmark list, and then the Web site is grouped to a broad heading where the top level domain name belongs.

More preferably, the step S3 of binding the Favicon or the site logo with the bookmark information before the bookmark is stored, and displaying the Favicon or the site logo as the graphical bookmark on the browser interface may further include:
S34: it is calculated the clicking counts of all graphical bookmarks stored in the bookmark list, and the greater the number of clicks on a graphical bookmark, the higher graphical bookmark is ranked and displayed in the bookmark list.

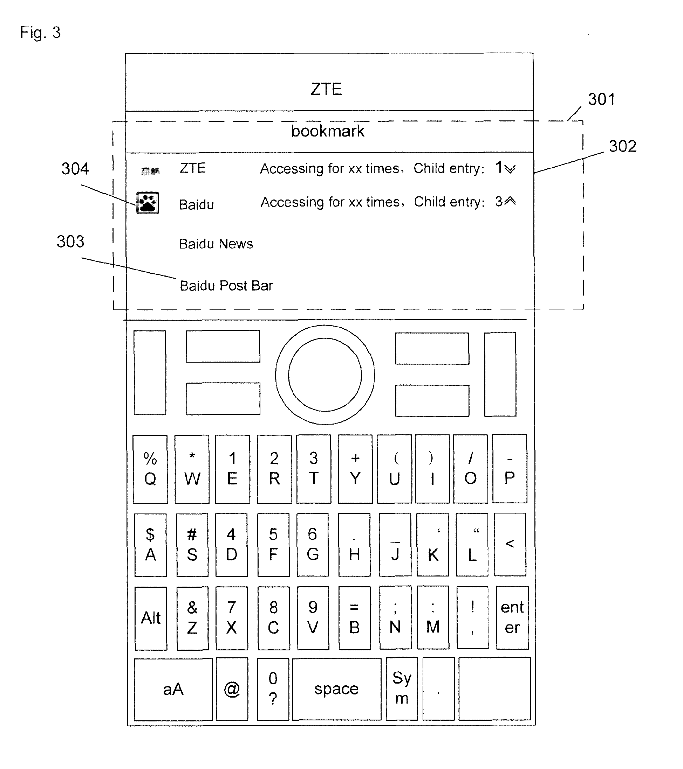

Fig. 3 is a diagram of displaying a graphical bookmark on a terminal according to an embodiment of the disclosure, including the following parts: bound picture information (the Favicon or a site logo picture represented by 304 in Fig. 3), a bookmark name and the statistical information of a current group (represented by 302 in Fig. 3) are displayed in a dotted box in a bookmark grouping entry 301. The bookmark grouping entry 301 can be unfolded, and bookmark child entries (303 in Fig. 3) are displayed after the bookmark grouping entry 301 is unfolded.

When a user searches for a required bookmark, a required class can be easily identified according to the Favicon or the site logo picture 304, and then is unfolded so as to conveniently locate the bookmark that the user wants to access. After the user selects a certain bookmark, a calculation module of the embedded browser performs calculation, and regulates display positions of bookmark grouping entries according to a calculation result, so as to rank the most frequently accessed bookmark groups at the top.

More preferably, the Step S3 of binding the Favicon or the site logo with the bookmark information before the bookmark is stored, and displaying the Favicon or the site logo as the graphical bookmark on the browser interface may further include:
S35: it is calculated the clicking counts of all the graphical bookmarks presented in the bookmark list, and the graphical bookmarks with a greater number of clicks are pushed to and displayed on a home page of the embedded browser according to the ranking of the clicking counts of the graphical bookmarks.

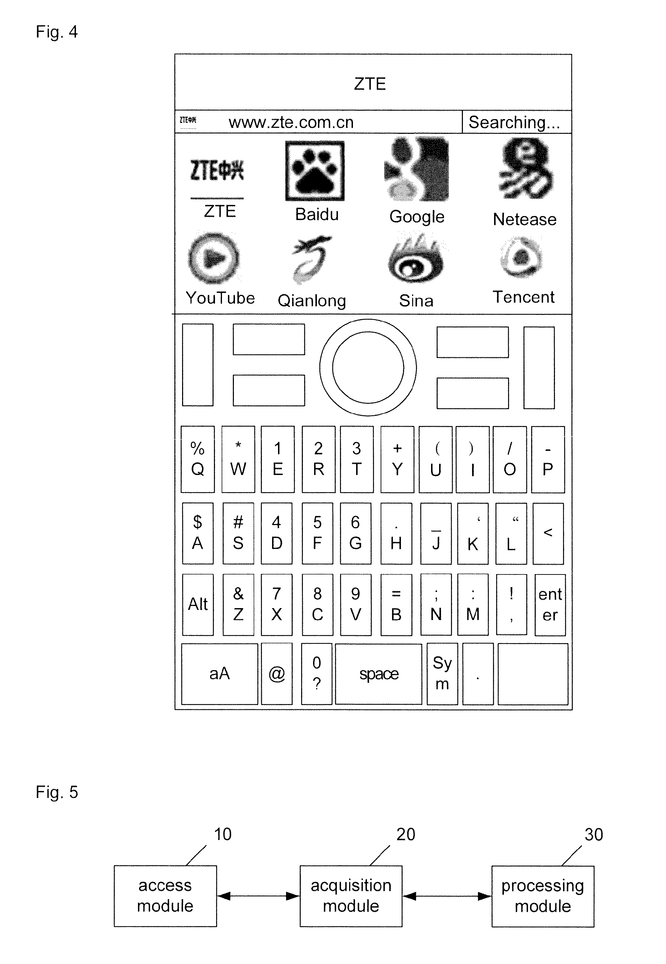

Fig. 4 is a diagram of pushing a graphical bookmark to a main interface according to an embodiment of the disclosure. The embedded browser automatically pushes the bookmark groups which are ranked at the top to the main interface of the embedded browser to further facilitate the bookmark selection of the user.

The embedded browser has a limited screen size, and when there are many bookmark entries stored, the bookmark entries cannot be conveniently searched from the bookmark list. According to the embodiment of the disclosure, the graphical bookmark bound with the bookmark information is generated by virtue of the Favicon and the site logo and is used for distinguishing different site information. The Favicon and the site logo serving as a mark of the site or a web page are smaller than the whole web page and very suitable for the embedded browser on the portable mobile communication terminal with the smaller screen, so that the problem is avoided that a web page thumbnail cannot be clearly seen on the terminal when a web page thumbnail manner is adopted in the relevant art.

In addition, according to the embodiment of the disclosure, the bookmarks are automatically classified according to the top level domain name, and thus broad headings are displayed in the bookmark list. After being found, a class can be unfolded so that the user can continue to view the bookmarks in the class. Thus, the user can rapidly locate the required bookmark.

On the basis of classification, a calculation unit makes data statistics, records the amount and access counts of the bookmarks in each bookmark group, and the bookmarks in the bookmark list are ranked according to statistical data, and the bookmarks which are ranked at the top may be automatically pushed to the home page of the browser.

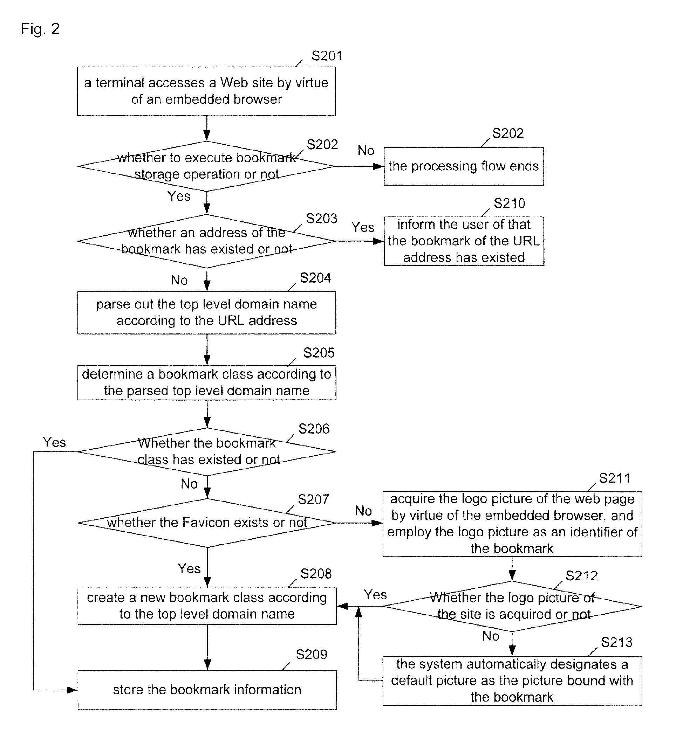

The graphical bookmark implementation method for the embedded browser according to and embodiment of the disclosure is described below in detail. Fig. 2 shows a flowchart of a graphical bookmark implementation method for an embedded browser according to an embodiment of the disclosure. An implementation process of the method includes the following steps.

S201: a user of a terminal accesses the Web site by virtue of the embedded browser on the terminal.

S202: the user of the terminal selects a bookmark storage function of the embedded browser, the embedded browser determines whether the user executes a bookmark storage operation or not, turning to S203 if yes, otherwise ending the processing flow.

S203: it is determined whether an address of the bookmark has existed or not, for example according to the URL address of the bookmark; turning to S210 if yes, otherwise turning to S204.

S204: it is parsed out the top level domain name according to the URL address.

In the embodiment, the top level domain name of the site www.baidu.com is baidu.com.

S205: it is determined a bookmark class according to the top level domain name parsed out in S204.

In the embodiment, the bookmark is classified according to the top level domain name, for example, www.baidu.com, news.baidu.com and tieba.baidu.com will all be classified to baidu.com.

S206: it is determined whether the bookmark class in S205 has existed or not, turning to S209 if yes, otherwise turning to S207.

S207: it is determined whether the Favicon exists or not, turning to S208 if a the determination result is positive, and turning to S211 if the determination result is negative.

S208: it is created a new bookmark class according to the top level domain name.

S209: the bookmark information, including a title, a URL and the logo picture, are stored and the flow ends

S210: the user is informed of that the bookmark of the URL address has existed, and the flow ends.

S211: the logo picture of the web page is acquired by virtue of the embedded browser, and the logo picture is employed as an identifier of the bookmark.

S212: it is determined whether the logo picture of the site is acquired or not in S211, turning to S208 if yes, otherwise turning to S213.

S213: the system automatically designates a default picture as the picture bound with the bookmark, and turning to S208.

According to another embodiment of the disclosure, it is provided a graphical bookmark implementation method for an embedded browser, which includes:
a terminal accesses a Web site by virtue of the embedded browser on the terminal;
a self-defined Favicon uniquely corresponding to the Web site is set by virtue of a graphical bookmark edition module; and
the self-defined Favicon is bound with information of a bookmark when the bookmark is stored, and the self-defined Favicon is presented as a graphical bookmark on a browser interface.

It should be understood that the self-defined Favicon in the embodiment of the disclosure may be a picture or a text pattern, and is used for a user to conveniently distinguish each site so as to rapidly find the wanted site and log in the site for browsing by virtue of the self-defined Favicon.

Similarly, in the embodiment of the disclosure, the Web site automatic-classification method and the graphical bookmark automatic-pushing method in the aforeementioned embodiment may also be adopted, and specific contents are described above, and will not be repeated here.

Correspondingly, as shown in Fig. 5, the embodiment of the disclosure also provides a graphical bookmark implementation device for an embedded browser, which includes an access module 10, an acquisition module 20 and a processing module 30.

The access module 10 is configured to access a Web site by virtue of the embedded browser.

The acquisition module 20 is configured to acquire a Favicon or a site logo of the Web site from the Web site which is accessed by the access module 10 and provide the Favicon or the site logo to the processing module 30.

The processing module 30 is configured to acquire the Favicon or the site logo from the acquisition module 20 when a bookmark needs to be stored, bind the Favicon or the site logo with bookmark information and present the Favicon or the site logo as a graphical bookmark on a browser interface. The bookmark information may include title information and URL information of the site.

Preferably, the processing module 30 may be specifically configured to parse the URL information in the bookmark information, and acquire the top level domain name information of the Web site according to the URL information. When a top level domain name exists in a bookmark list, the processing module 30 groups the Web site into a broad heading where the top level domain name belongs. A graphical bookmark of the top level domain name is a Favicon or a site logo which is presented in the bookmark list and corresponds to the top level domain name. When the top level domain name does not exist in the bookmark list, the processing module 30 creates a graphical bookmark according to the Favicon or the site logo corresponding to the top level domain name, presents the graphical bookmark in the bookmark list and groups the Web site to the broad class where the top level domain name belongs.

More preferably, the processing module 30 may be further configured to calculate the clicking counts of all graphical bookmarks presented in the bookmark list when the bookmark is stored, and place the graphical bookmarks which are clicked for more times at the top in the bookmark list according to the ranking of the clicking counts of the graphical bookmarks.

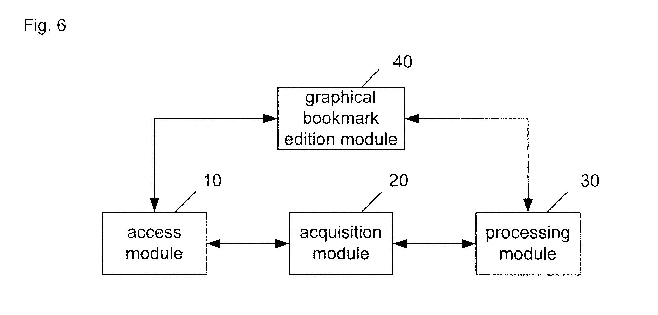

As shown in Fig. 6, according to a preferred embodiment, the graphical bookmark implementation device for the embedded browser may further include: a graphical bookmark edition module 40, configured to set a self-defined Favicon uniquely corresponding to the Web site accessed by the access module 10 and transmit the self-defined Favicon to the processing module 30. The processing module 30 may be further configured to receive the self-defined Favicon transmitted by the graphical bookmark edition module 40, bind the self-defined Favicon with the information of a bookmark when the bookmark is stored, and present the self-defined Favicon as the graphical bookmark on the browser interface. The access module 10 may be further configured to provide a currently accessed Web site to the graphical bookmark edition module 40.

The graphical bookmark edition module 40 may be specifically configured to edit the self-defined Favicon of the Web site and transmit the self-defined Favicon to the processing module 30. The processing module 30 may be specifically configured to receive the self-defined Favicon transmitted by the graphical bookmark edition module 40, bind the self-defined Favicon with a bookmark of the Web site as the graphical bookmark of the site, and present the graphical bookmark in the bookmark list of the embedded browser. The acquisition module 20 may be further configured to notify, when the Favicon or the site logo of the Web site cannot be acquired, a user to edit the self-defined Favicon of the Web site.

The graphical bookmark edition module 40 may be further configured to select a stored default picture representative of the Web site, and then bind the selected default picture with the bookmark of the Web site, so that the selected default picture serves as the graphical bookmark of the site.

Correspondingly, the embodiment of the disclosure also provides a terminal, which includes the abovementioned graphical bookmark implementation device for the embedded browser, and also as shown in Fig. 6, the device includes an access module 10, an acquisition module 20 and a processing module 30.

The access module 10 is configured to make the terminal access a Web site by virtue of the embedded browser on the terminal.

The acquisition module 20 is configured to acquire a Favicon or a site logo of the Web site from the Web site which is accessed by the access module 10 and provide the Favicon or the site logo to the processing module 30.

The processing module 30 is configured to acquire the Favicon or the site logo from the acquisition module 20 when a bookmark needs to be stored, bind the Favicon or the site logo with bookmark information and present the Favicon or the site logo as a graphical bookmark on a browser interface. The bookmark information may include title information and URL information of the site.

The processing module 30 may be specifically configured to parse the URL information in the bookmark information, and acquire the top level domain name information of the Web site according to the URL information. When a top level domain has existed in a bookmark list, the processing module 30 groups the Web site into a broad heading where the top level domain name belongs. A graphical bookmark of the top level domain name is a Favicon or a site logo which is presented in the bookmark list and corresponds to the top level domain name. When the top level domain name does not exist in the bookmark list, the processing module 30 creates a graphical bookmark according to the Favicon or the site logo corresponding to the top level domain name, presents the graphical bookmark in the bookmark list and groups the Web site to the broad class where the top level domain name belongs.

More preferably, the processing module 30 may be further configured to calculate the clicking counts of all graphical bookmarks presented in the bookmark list when the bookmark is stored, and place the graphical bookmarks which are clicked for more times at the top in the bookmark list according to the ranking of the clicking counts of the graphical bookmarks.

According to a preferred embodiment, the graphical bookmark implementation device for the embedded browser may further include: a graphical bookmark edition module 40, configured to set a self-defined Favicon uniquely corresponding to the Web site accessed by the access module 10, so that the processing module 30 binds the self-defined Favicon with the information of a bookmark when the bookmark is stored, and presents the self-defined Favicon as the graphical bookmark on the browser interface.

The above is only preferred embodiments of the disclosure and not intended to limit the scope of the disclosure. Any equivalent structure or flow transformation made by virtue of contents of the specification and drawings of the disclosure, or direct or indirect application of the contents to other related technical fields, shall fall within the scope of protection of the disclosure.

## Claims

1. A graphical bookmark implementation method for an embedded browser, comprising:
accessing a Web site by virtue of the embedded browser;
acquiring a Favorites Icon (Favicon) or a site logo of the Web site; and
binding the Favicon or the site logo with information of a bookmark when the Web site needs to be stored as the bookmark, and presenting the Favicon or the site logo as a graphical bookmark on a browser interface of the embedded browser.

2. The method according to claim 1, wherein the information of the bookmark comprises: title information and Uniform Resource Locator (URL) information of the Web site.

3. The method according to claim 2, wherein the binding and presenting comprises:
parsing the URL information in the information of the bookmark, and acquiring a top level domain name of the Web site according to the URL information;
when the top level domain name has existed in a bookmark list, grouping the Web site to a broad heading where the top level domain name belongs, wherein a graphical bookmark of the top level domain name is a Favicon or a site logo which is presented in the bookmark list and corresponds to the top level domain name; and
when the top level domain name does not exist in the bookmark list, creating a graphical bookmark according to the Favicon or the site logo corresponding to the top level domain name, presenting the created graphical bookmark in the bookmark list, and grouping the Web site to the broad heading where the top level domain name belongs.

4. The method according to claim 3, further comprising: after the binding and presenting,
calculating clicking counts of all graphical bookmarks presented in the bookmark list, and presenting graphical bookmarks with a greater number of clicks at the top of the bookmark list according to a ranking of the clicking counts of the all graphical bookmarks.

5. The method according to claim 3, further comprising: after the binding and presenting,
calculating clicking counts of all graphical bookmarks presented in the bookmark list, and pushing, according to a ranking of the clicking counts of the all graphical bookmarks, graphical bookmarks with a greater number of clicks to a home page of the embedded browser for display.

6. A graphical bookmark implementation method for an embedded browser, comprising:
accessing a Web site by virtue of the embedded browser;
setting a self-defined Favorites Icon (Favicon) uniquely corresponding to the Web site by virtue of a graphical bookmark edition module; and
binding the self-defined Favicon with information of a bookmark when the Web site needs to be stored as the bookmark, and presenting the self-defined Favicon as a graphical bookmark on a browser interface of the embedded browser.

7. A graphical bookmark implementation device for an embedded browser, comprising:
an access module, an acquisition module and a processing module,
wherein the access module is configured to access a Web site by virtue of the embedded browser,
wherein the acquisition module is configured to acquire a Favorites Icon (Favicon) or a site logo of the Web site from the Web site accessed by the access module and provide the Favicon or the site logo to the processing module, and
wherein the processing module is configured to acquire the Favicon or the site logo from the acquisition module when the Web site needs to be stored as a bookmark, bind the Favicon or the site logo with information of the bookmark, and present the Favicon or the site logo as a graphical bookmark on a browser interface of the embedded browser.

8. The device according to claim 7, wherein the processing module is configured to store title information and Uniform Resource Locator (URL) information of the Web site as the information of the bookmark.

9. The device according to claim 8, wherein the processing module is configured to:
parse the URL information in the information of the bookmark when the Web site needs to be stored as the bookmark, and acquire a top level domain name of the Web site according to the URL information;
when the top level domain name has existed in a bookmark list, group the Web site to a broad heading where the top level domain name belongs, wherein a graphical bookmark of the top level domain name is a Favicon or a site logo which is presented in the bookmark list and corresponds to the top level domain name; and
when the top level domain name does not exist in the bookmark list, create a graphical bookmark according to the Favicon or the site logo corresponding to the top level domain name, present the created graphical bookmark in the bookmark list, and group the Web site to the broad heading where the top level domain name belongs.

10. The device according to claim 8, wherein the processing module is configured to, after presenting the Favicon or the site logo as a graphical bookmark on a browser interface of the embedded browser,
calculate clicking counts of all graphical bookmarks presented in the bookmark list, and present the graphical bookmarks with a greater number of clicks at the top of the bookmark list according to a ranking of the clicking counts of the all graphical bookmarks.

11. The device according to claim 7, further comprising: a graphical bookmark edition module, configured to set a self-defined Favicon uniquely corresponding to the Web site accessed by the access module and transmit the self-defined Favicon to the processing module,
wherein the processing module is further configured to receive the self-defined Favicon transmitted by the graphical bookmark edition module, bind the self-defined Favicon with the information of the bookmark when the Web site needs to be stored as the bookmark, and present the self-defined Favicon as the graphical bookmark on the browser interface, and
wherein the access module is further configured to provide a currently accessed Web site to the graphical bookmark edition module.

12. A terminal, comprising the graphical bookmark implementation device for a embedded browser according to any one of claims 7 to 11.
